# EUROPÄISCHE PATENTSCHRIFT

(11) **EP 2 315 794 B1**
(45) Veröffentlichungstag und Bekanntmachung des Hinweises auf die Patenterteilung: **06.02.2019**
(21) Anmeldenummer: 09781836.3
(22) Anmeldetag: 14.08.2009
(51) Int. Cl.: C08G 69/26, C08G 69/28, C08G 69/30, C08G 69/36, C08G 69/46, B29C 47/76

(54) **BATCH-VERFAHREN ZUR HERSTELLUNG VON POLYAMIDEN**
BATCH PROCESS FOR PREPARING POLYAMIDES
PROCÉDÉ DISCONTINU DE FABRICATION DE POLYAMIDES

(30) Priorität: 14.08.2008 EP 08162409
(43) Veröffentlichungstag der Anmeldung: 04.05.2011
(73) Patentinhaber: BASF SE, 67056 Ludwigshafen am Rhein (DE)
(72) Erfinder: DESBOIS, Philippe, 68535 Edingen-Neckarhausen (DE); EL-TOUFAILI, Faissal-Ali, 67063 Ludwigshafen (DE); GALL, Michael, 67435 Neustadt (DE); WOLLNY, Andreas, 67063 Ludwigshafen (DE)
(74) Vertreter: BASF IP Association
(86) Internationale Anmeldenummer: PCT/EP2009/060532
(87) Internationale Veröffentlichungsnummer: WO 2010/018220

(56) Entgegenhaltungen:
- DE-A1- 2 715 860
- DE-A1- 4 337 353
- DE-A1- 19 514 145
- JP-A- 2004 204 027
- US-B1- 6 169 162

## Beschreibung

Die Erfindung betrifft ein Batch-Verfahren zur Herstellung von Polyamiden in einer Sequenz aus Rührkesselreaktor und Extruder.

Die Herstellung von Polyamiden durch Umsetzung in Rührkesselreaktoren mit nachfolgendem Extruder ist prinzipiell bekannt. Die US 4,963,646 beschreibt die Herstellung von amorphen (Co)Polyamiden durch Polykondensation von zwei Präpolymeren mit zueinander komplementären Endgruppenüberschüssen in der Schmelze und nachfolgende Umsetzung beider Präpolymere in einem Extruder.

Die EP-A-0 410 649 betrifft die Umsetzung von Monomeren zur Herstellung von Präpolymeren, die einen Diaminunterschuss aufweisen, und nachfolgende weitere Umsetzung in einem Extruder unter Zusatz von Diaminen.

Die EP-A-0 693 515 betrifft Verfahren zur Herstellung von Vorkondensaten teilkristalliner oder amorpher, thermoplastisch verarbeitbarer teilaromatischer Polyamide bzw. Copolyamide durch Salzbildung aus Diaminen und Dicarbonsäuren, Umsetzung in einem Autoklaven unter kontrolliertem Einstellen des Wasserdampfpartialdruckes, wobei spezifische Temperatur- und Druckbereiche in Abhängigkeit der Amidkonzentration eingehalten werden müssen. Eine nachfolgende Umsetzung kann in einem Extruder durchgeführt werden.

Die EP-A-1 225 191 betrifft die Herstellung von Polyamiden durch Schmelzpolykondensation, wobei Diamine und Dicarbonsäuren zunächst in einem Batchreaktor umgesetzt werden, an den sich ein Schmelzeretentionstank und ein kontinuierlicher zweiter Polymerisator anschließen.

Die DE-A-10 2004 029 935 betrifft ein Verfahren zur kontinuierlichen Herstellung von Copolyamiden mit Schmelzpunkten von mehr als etwa 265°C durch Umsetzung zunächst in einer Rührkesselkaskade in kontinuierlicher Fahrweise und nachfolgend Umsetzung in einem Extruder.

DE-A-43 37 353 betrifft ein Verfahren zur Synthese von Polyamiden durch Polykondensation in einem geschlossenen Reaktor, in dem zunächst die Dicarbonsäurekomponente aufgeschmolzen wird und sodann das gesamte Diamin zugefügt wird. Die Diaminverbindung enthält dabei mindestens 60 Mol/% m-Xylylendiamin. Nach Erhöhen der Temperatur und erfolgter Umsetzung wird der Druck im Reaktor vermindert, und das gebildete Polyamid wird gewonnen.

Dabei kann zumindest ein Teil der Druckverminderung unter dem atmosphärischen Druck durchgeführt werden, um Polyamide mit hoher Molekularmasse zu erhalten. Der Teil der Druckverminderung unterhalb atmosphärischem Drucks kann in einem getrennten zusätzlichen Reaktor, der für diesen Zweck vorgesehen ist, durchgeführt werden. Sobald die Polykondensationsphase unter Druck beendet ist, ist es möglich, den Druck auf atmosphärischen Druck fallen zu lassen (Stufe 3). Ein noch deutlicherer Anstieg der Molekularmasse kann erreicht werden, indem der Druck der Reaktionsmischung auf einen Druck unterhalb des atmosphärischen Drucks vermindert wird. Für dieses Verfahren stehen mehrere Verfahrensoptionen zur Verfügung: Es kann im Polykondensationsreaktor durchgeführt werden oder in einem getrennten zusätzlichen druckreduzierenden Reaktor. Dieser zusätzliche Reaktor kann beispielsweise ein Filmverdampfer, ein kontinuierlicher Schneckenreaktor oder dergleichen sein.

DE-A-27 15 860 betrifft ein Verfahren zur Herstellung von Polyamiden. Dabei werden spezielle Ausgangsmonomere in Gegenwart von Manganhypophosphit in einem Reaktor umgesetzt. Nach der Umsetzung wird der Druck im Reaktor auf atmosphärischen Druck in der Weise allmählich entspannt, dass eine Aufschäumung der Reaktionsmasse vermieden wird. Dazu ist beispielsweise ein Zeitraum von 10 bis 60 Minuten, bevorzugt 20 bis 40 Minuten erforderlich. Gegebenenfalls wird zu diesem Zeitpunkt eine Spülung mit Stickstoff durchgeführt, um Spuren von Wasserstoff zu entfernen und das Aufschäumen des Polykondensats zu vermeiden. Das so hergestellte Produkt wird dann isoliert, beispielsweise durch Extrusion, wobei ein breiter Zeitraum von 0 bis 30 Minuten, bevorzugt 2 bis 15 Minuten, verwendet werden kann. Es wird ferner erwähnt, dass für die Umsetzung übliche Autoklaven benutzt werden können, ebenso jedoch Reaktor/Extruder mit Einrichtungen für die Entfernung von flüchtigen Bestandteilen. Das Vorkondensat kann z. B. weiter kondensiert werden in einem kontinuierlichen oder diskontinuierlichen Kondensationssystem, das eine mit einer Entlüftung versehene Extrusionszone besitzt. Man kann das erwärmte Vorkondensat unter Druck in einen erwärmten Extruder einpressen. Gemäß Beispiel 1 erfolgt die Umsetzung in einem Edelstahlautoklaven, worin nach Entspannen auf atmosphärischen Druck das Produkt durch eine Öffnung im Boden des Reaktors extrudiert wird. Dabei wird das Vorkondensat in ein wässriges Abschreckbad extrudiert, wobei es zu Strängen ausgezogen wird. Gemäß Beispiel 4 wird ein Vorkondensat, wie in Beispiel 1 beschrieben, hergestellt. Das so erhaltene Vorkondensat wird unter einer inerten Atmosphäre geschmolzen, und die Schmelze wird einem kontinuierlichen Reaktor mit einer Einrichtung zur Entfernung von flüchtigen Bestandteilen zugeführt (Baker-Perkins Poly-Con®-100 stainless steel reactor) bei einem Druck von 13 Pa, einer Temperatur von 279 °C, einer Verweilzeit von 12,1 Minuten und einer Rührgeschwindigkeit von 21 µm. Damit wird das Umsetzungsgemisch aus dem ersten Reaktor zunächst nach Entlüften auf Atmosphärendruck mit einem Extruder in ein Granulierbad ausgetragen, woraufhin das Granulat erneut aufgeschmolzen und in einen Entgasungsextruder überführt wird.

DE-A-195 14 145 beschreibt die Herstellung von Polyamiden in Extrudern, wobei Diamin/Dicarbonsäure-Salze zunächst in einem gegenläufigen und danach in einem gleichläufigen Doppelschneckenextruder umgesetzt werden.

JP 2004 204027 offenbart ein Verfahren zur kontinuierlichen Herstellung von Polyamiden, wobei in einem Reaktor kontinuierlich Diamin zu Dicarbonsäure zugegeben wird, während das Monomergemisch erwärmt wird.

Die Einstellung der gewünschten Stöchiometrie ist bei derartigen kontinuierlichen Herstellungsverfahren sehr schwierig, da eine entsprechend feine Dosierung der Diamin- bzw. Dicarbonsäure-Ströme kaum möglich ist.

Die separate Zudosierung weiterer Polyamide oder Ausgangsmonomere in einem Extruder ist technisch aufwendig, und die Reaktionsführung wie auch das Produkt sind schwer zu kontrollieren.

Aufgabe der vorliegenden Erfindung ist die Bereitstellung eines Verfahrens zur Herstellung von Polyamiden, das flexibel die Herstellung von Polyamiden und Copolyamiden mit Schmelzpunkten von 110 bis 350°C erlaubt, wobei Ablagerungen oder Fouling an den Reaktorwänden vermieden werden. Zudem sollen Nebenprodukte in möglichst geringen Mengen gebildet werden. Das Verfahren soll technisch unaufwendig sein und die Einstellung einer genauen Stöchiometrie in Polyamiden erlauben. Ferner soll es möglich sein, den Eintrag von zusätzlichem Wasser in das Reaktionssystem, das nachfolgend wieder entfernt werden muss, zu vermeiden. Weiterhin soll die Herstellung von Polyamiden bei geringen Temperaturen und Drücken möglich sein.

Die Aufgaben werden erfindungsgemäß gelöst durch ein Batch-Verfahren zur Herstellung von Polyamiden auf Basis von Dicarbonsäuren und Diaminen durch
1) Dosieren der gesamten Monomermenge aus linearen endständigen, aliphatischen C₄-C₂₀-Dicarbonsäuren, linearen aliphatischen, endständigen C₄-C₂₀-Diaminen und gegebenenfalls Lactamen in der gewünschten Stöchiometrie in einem geschlossenen Rührkesselreaktor,
2) Erwärmen des Monomerengemisches im gerührten Rührkesselreaktor unter Einstellung eines bestimmten Drucks auf eine gewünschte Umsetzungstemperatur zur Herstellung eines Präpolymeren, wobei die Umsetzung in Stufe 2) bei einer Temperatur im Bereich von 70 bis 350°C und einem Maximaldruck im Bereich von 3 bis 100 bar erfolgt und die Umsetzung im Rührkesselreaktor nach einem Umsatz im Bereich von 50 bis 97 %, bezogen auf die Amino- und Carboxylgruppen, beendet wird, wobei die Viskositätszahl des Präpolymären im Bereich von 3 bis 200 ml/g liegt, bestimmt durch Lösungsviskosimetrie, wobei die Polyamidproben in 96 ±0,1 % Schwefelsäure gelöst wurden, um eine 0,5-gew.-%ige Polymerlösung zuzubereiten und wobei die Durchlaufzeit des Lösungsmittels und der Polymerlösung bei 25 ± 0,05 °C Wasserbadtemperatur in einem Ubbelohde-Viskosimeter ermittelt wurden,
5) Umsetzung des Umsetzungsgemisches aus Stufe 2), in der Schmelze in einem Entgasungsextruder zum weiteren Aufbau des Molekulargewichts unter Austrag von Wasserdampf und ohne Zusatz von zusätzlichen polyamidbildenden Monomeren oder Polyamiden, bei einer Temperatur im Bereich von 120 bis 370 °C und einem Druck im Bereich von 0,01 bis 20 bar, wobei das Umsetzungsgemisch aus Stufe 2) direkt in den Entgasungsextruder in Stufe 5) geführt wird
und zwei oder mehr parallel geschaltete Rührkesselreaktoren abwechselnd betrieben werden, deren Umsetzungsprodukte abwechselnd dem Entgasungsextruder zugeführt werden.

Das Präpolymer ist ein Stoff mit niedrigerer Viskosität und höherem Endgruppengehalt im Vergleich zum Endprodukt.

Das erfindungsgemäße Verfahren weist mindestens zwei Verfahrensstufen auf, von denen eine diskontinuierlich in einem Rührkesselreaktor durchgeführt wird, während die zweite Stufe, unmittelbar an den Rührkesselreaktor anschließend, in einem Entgasungsextruder durchgeführt wird.

Im Unterschied zu bekannten Verfahren werden sämtliche Ausgangsmonomere in der gewünschten Stöchiometrie bereits in den Rührkesselreaktor dosiert, wobei ein Zusatz von Wasser nicht notwendig ist. Auch eine vorgelagerte Salzbildungsstufe ist nicht notwendig.

Im Rührkesselreaktor wird ein Präpolymer mit niedriger Viskosität erhalten, wodurch die Bildung von Ablagerungen oder ein Fouling an den Reaktorwänden vermieden werden.

Im erfindungsgemäßen Verfahren wird im Rührkesselreaktor zunächst unter einem bestimmten, z. b. autogenem Druck erhitzt. Nach Erreichen der gewünschten Endtemperatur stellt sich z. B. ein konstanter (Gleichgewichts-)Druck ein. Das Umsetzungsgemisch kann nach Erreichen der gewünschten Temperatur sowie des gewünschten Drucks bzw. Konstantbleiben des Drucks direkt über einen Entgasungsextruder entspannt und weiterverarbeitet werden. Gemäß einer weiteren Ausführungsform der Erfindung kann das Umsetzungsgemisch bei der Zieltemperatur und beim konstanten Druck für eine weitere Zeit umgesetzt werden, bevor über den Entgasungsextruder entspannt wird.

Beim langsamen Druckabbau im Rührkesselreaktor kann das Molekulargewicht des im Gleichgewicht vorliegenden Präpolymers erhöht werden. Nach dem Druckabbau kann die Temperatur beibehalten, gesenkt oder auch erhöht werden. Der Druckabbau führt zu einem Ansteigen der Schmelzviskosität im Umsetzungsgemisch, und das Ausmaß des Druckabbaus bestimmt die gewünschte Endschmelzviskosität. Der Druck wird in der Praxis vorzugsweise so gewählt, dass ein kompletter Austrag des Präpolymers aus dem Rührkesselreaktor möglich ist. Beispielsweise wird der Druck abschließend wieder erhöht, um einen kompletten Austrag des Präpolymeren aus dem Rührkesselreaktor zu ermöglichen. Alternativ kann der Austrag über ein Förderelement erfolgen.

Dabei wird in Stufe 2) bei einer Temperatur im Bereich von 70 bis 350°C, besonders bevorzugt 120 bis 320°C umgesetzt. Der Maximaldruck liegt dabei im Bereich von 3 bis 100 bar, besonders bevorzugt 5 bis 50 bar. Die Temperatur im Rührkesselreaktor wird dabei kontinuierlich auf die Zieltemperatur erhöht. Nach Erreichen der Zieltemperatur kann das Umsetzungsgemisch vorzugsweise für einen Zeitraum von 5 Minuten bis 48 Stunden bei dieser Temperatur gehalten werden. Zuvor kann der sich einstellende autogene Druck ganz oder teilweise abgelassen werden.

Die Stufen 1) und 2) werden im identischen Rührkesselreaktor durchgeführt, so dass sich an den (ersten) Rührkesselreaktor der Entgasunsextruder der Stufe 5 unmittelbar anschließt.

Die gesamte Verweilzeit im Rührkesselreaktor beträgt vorzugsweise 10 Minuten bis 48 Stunden, besonders bevorzugt 0,5 bis 12 Stunden. Dabei wird vorzugsweise in einem Zeitraum von 2 Minuten bis 32 Stunden, besonders bevorzugt 0,3 bis 10 Stunden auf die gewünschte Maximaltemperatur aufgeheizt.

Durch die Umsetzung von linearen endständigen, aliphatischen C₄-C₂₀-Dicarbonsäuren und linearen aliphatischen, endständigen C₄-C₂₀-Diaminen entsteht in Stufe 2) Wasser bzw. Wasserdampf. Dabei ist die Bildung von Polyamiden bzw. Präpolymeren bei niedrigen Temperaturen möglich, und die Viskosität des Umsetzungsproduktes bleibt sehr niedrig, so dass die Bildung von Ablagerungen vermieden werden kann. Dabei liegt die Viskositätszahl des Präpolymeren im Bereich von 3 bis 200 ml/g, bestimmt durch Lösungsviskosimetrie. Die Polyamidproben wurden in 96 ± 0,1 % Schwefelsäure gelöst, um eine 0,5-gew.-%ige Polymerlösung zuzubereiten. Die Durchlaufzeit des Lösungsmittels und der Polymerlösung wurden bei 25 ± 0,05°C Wasserbadtemperatur in einem Ubbelohde-Viskosimeter ermittelt. Die Umsetzung im Rührkesselreaktor wird nach einem Umsatz im Bereich von 50 bis 97 %, besonders bevorzugt etwa 80 %, bezogen auf Amino- und Carboxylgruppen, beendet. Ein Gleichgewichtszustand wird erreicht, wenn etwa 50-97 % der funktionellen Endgruppen, d. h. Carboxyl- und Aminoendgruppen zu Amidbindungen umgesetzt sind. Dabei entsteht eine entsprechende Menge an Wasser. Dieses Gemisch aus Polyamid mit niedrigem Molekulargewicht und Wasser wird durch den Entgasungsextruder, der vorzugsweise selbstreinigend ist, ausgetragen, um das im Gleichgewicht entstandene Wasser zu entfernen und das Molekulargewicht auf den gewünschten Wert anzuheben.

Ein weiterer Vorteil des erfindungsgemäßen Verfahrens liegt darin, dass die Polykondensation ausgehend von den Bulk-Monomeren ohne Zusatz von Wasser oder vorherige Bildung von Monomersalzen erfolgen kann. Durch diesen Schritt wird die Energie eingespart, die ansonsten für die Verdampfung des zugesetzten Wassers erforderlich wäre (bei bekannten Verfahren typischerweise im Bereich von 20 bis 60 % Wasserzusatz).

Im erfindungsgemäßen Verfahren werden die Polyamide ausgehend von linearen endständigen, aliphatischen C₄-C₂₀-Dicarbonsäuren und linearen aliphatischen, endständigen C₄-C₂₀-Diaminen und vorzugsweise ohne (vorherige) Bildung von Monomersalzen hergestellt. Gegebenenfalls können Lactame als weitere polyamidbildende Monomere mit verwendet werden.

Geeignete lineare aliphatische, endständige C₄-C₂₀-Diamine und lineare endständige, aliphatische C₄-C₂₀-Dicarbonsäuren sind dem Fachmann bekannt. Beispiele für lineare endständige, aliphatische C₄-C₂₀-Dicarbonsäuren sind Adipinsäure und Sebacinsäure. Vorzugsweise ist die lineare endständige, aliphatische C₄-C₂₀-Dicarbonsäure eine C₄-C₈-Dicarbonsäure.

Als Diamine werden ebenfalls lineare aliphatische, endständige C₄₋₂₀-Diamine, vorzugsweise C₄₋₈-Diamine eingesetzt. Ein typischer Vertreter ist Hexamethylendiamin.

Als weitere polyamidbildende Monomere können Lactame wie Caprolactam genannt werden.

Teilkristalline thermoplastische Polyamide mit einem Kristallinitätsgrad von mindestens 20 %, hergestellt durch das beschriebene Verfahren, sind aufgebaut aus
a) einer aliphatischen Dicarbonsäure mit 4 - 18 C-Atomen, insbesondere Adipinsäure, Sebacinsäure, Dodecandisäure, Tetradecandisäure und Octadecandisäure oder einer Mischung dieser und
b) einem aliphatischen Diamin mit 4 - 16 C-Atomen, insbesondere Butandiamin, Hexamethylendiamin, Octandiamin und Decandiamin oder einer Mischung dieser. Insbesondere ist ein Polyamid aus Hexamethylendiamin und Adipinsäure oder ein Polyamid aus Hexamethylendiamin und Sebacinsäure, Dodecandisäure oder Tetradecandisäure oder aus Mischungen der genannten Dicarbonsäuren bevorzugt.

Amorphe oder mikrokristalline, transparente thermoplastische Polyamidformmassen mit einer Glastemperatur größer als 50 °C, vorteilhafterweise größer 90 °C, hergestellt durch das beschriebene Verfahren sind aufgebaut aus
a) einer Dicarbonsäure ausgewählt aus aliphatischen Dicarbonsäuren mit 6 - 16 C-Atomen, insbesondere Adipinsäure, Sebacinsäure, Dodecandisäure und Tetradecandisäure oder Mischungen aus diesen, und
b) einem aliphatischen Diamin mit 6 bis 12 C-Atomen.

Die vorstehenden Polyamidformmassen hergestellt nach dem beschriebenen Verfahren können zusätzlich
a) 0 bis 50 Gew.-% eines faser- oder teilchenförmigen Füllstoffs,
b) 0 bis 30 Gew.-% eines kautschukelastischen Polymerisats oder Schlagzähmodifikators und/oder
c) 0 bis 60 Gew.-% weitere Zusatzstoffe und Verarbeitungshilfsmittel, insbesondere Wärmestabilisatoren, Flammschutzmittel, Entformungsmittel oder Zusatzstoffe, die die Gleitreibeeigenschaften und/oder die thermische und/oder elektrische Leitfähigkeit der anspruchsgemäßen Polyamidformmasse verbessern, enthalten.

Die nach dem erfindungsgemäßen Verfahren hergestellten Polyamidformmassen und Polyamidzubereitungen können als
a) Fasern, Folien und Formkörper, insbesondere als technische Spritzgussbauteile oder zum Umspritzen von Metalleinlegern,
b) sowie als Blendkomponente für Polymerblends mit anderen Polymeren, insbesondere mit anderen Polyamiden, insbesondere mit PA6 oder PA6.6, dabei besonders mit einem Gewichtsanteil zwischen 1 und 50 Gew.-%, besonderes 10 - 40 Gew.-%, der vorstehenden Polyamide verwendet werden.
c) Insbesondere ist eine Verwendung der Lösung des entsprechenden Polyamids, insbesondere in Wasser, Alkoholen oder Mischungen aus Wasser und Alkoholen, für z. B. Backlacke, Beschichtungen oder Überzüge denkbar.

Die linearen endständigen, aliphatischen C₄-C₂₀-Dicarbonsäuren, linearien aliphatischen, endständigen C₄-C₂₀-Diamine und gegebenenfalls Lactame werden in der gewünschten Stöchiometrie in Stufe 1) in einen geschlossenen Rührkesselreaktor dosiert. Dabei wird typischerweise eines der Monomere bereits in den Rührkesselreaktor eingewogen, und das andere Monomere bis zum Erreichen der gewünschten Stöchiometrie zugeführt. In einem typischen Produktionsverfahren werden die Diaminmonomere in einen ummantelten Feed-Tank eingewogen. Die Dicarbonsäure-Monomere und andere Komponenten wie Caprolactam werden direkt in den Rührkesselreaktor eingewogen. Nach Zugabe der Diamine und Homogenisierung der Reaktanden durch Erwärmen auf milde Temperaturen unter Rühren kann beispielsweise eine Probe für die Titration genommen werden, um die Bestimmung der Konzentration an Endgruppen und die Bestimmung der Stöchiometrie zu ermöglichen. Nach Einstellen der gewünschten Stöchiometrie wird das Umsetzungsgemisch auf die gewünschte Temperatur erwärmt und unter Rühren bei dieser Temperatur gehalten, bis ein Gleichgewicht erreicht wird. Der Reaktionsdruck steigt mit der Reaktionszeit an, da Wasser bei der Polykondensation entsteht. Im Gleichgewicht erreicht der Druck einen konstanten Wert. Der Endwert des Drucks hängt von der Zusammensetzung des Reaktionsgemisches und von der Temperatur ab. Nach Erreichen des Gleichgewichts kann das Präpolymer über den Entgasungsextruder ausgetragen werden. Der Rührkesselreaktor wird vorzugsweise für die gesamte Reaktions- und Austragszeit geschlossen gehalten.

In den Verfahren nach dem Stand der Technik wird eine Balance der Endgruppen typischerweise durch Herstellung einer Salzlösung aus den Monomeren erreicht, wobei die Balance über Einstellung eines vorbestimmten pH-Werts erreicht wird. Die kontinuierliche Zudosierung von Monomeren direkt in den Reaktor führt zu Fluktuationen von Endgruppen aufgrund der Messungenauigkeit, die typischerweise größer als der Toleranzbereich ist. Die genaue Dosierung von zwei oder mehr Pumpsystemen ist in der Regel nicht möglich. Bei der Batch-weisen Herstellung des Monomerengemisches dagegen kann die Stöchiometrie durch Bestimmung von Amino- und Carboxylendgruppen durch Säure-/Base-Titration bestimmt werden.

Damit hat das erfindungsgemäße Batch-Verfahren zur Herstellung von Polyamiden den Vorteil, dass die Produktzusammensetzung sehr spezifisch eingestellt werden kann. Zudem weist das erfindungsgemäße Verfahren eine hohe Flexibilität auf, da das Produkt schnell gewechselt werden kann. Durch die erfindungsgemäße, mindestens zweistufige Herstellung kann die Schmelzeviskosität des Produkts aus dem Rührkesselreaktor gering gehalten werden, und dennoch können am Ende des Verfahrens Polyamide mit hohem Molekulargewicht erhalten werden.

In Stufe 5) erfolgt die weitere Umsetzung des Umsetzungsgemisches aus Stufe 2) in der Schmelze in einem Entgasungsextruder. Dabei wird das Molekulargewicht weiter aufgebaut, und Wasserdampf wird ausgetragen. Es erfolgt erfindungsgemäß kein Zusatz von zusätzlichen polyamidbildenden Monomeren (z. B. Dicarbonsäuren, Diaminen oder anderen Monomeren) oder Polyamiden in den Extruder. Ein Eintrag von Monomeren erfolgt nur in den Rührkesselreaktor, und Polyamide werden im gesamten Verfahren nicht zudosiert. Hierdurch unterscheidet sich das erfindungsgemäße Verfahren deutlich von den Verfahren des Standes der Technik.

Die Umsetzung im Entgasungsextruder wird bei einer Temperatur im Bereich von 120 bis 370°C durchgeführt. Dabei wird bei einem Druck im Bereich von 0,01 bis 20 bar gearbeitet.

Das letztendlich erhaltene Polyamid oder Copolyamid weist vorzugsweise einen Schmelzpunkt im Bereich von 110 bis 350°C, besonders bevorzugt im Bereich von 130 bis 330°C auf.

In Stufe 5) können beliebige geeignete Entgasungsextruder eingesetzt werden, die einen Austrag von Wasserdampf und gegebenenfalls flüchtigen Monomeren, z. B. Diaminen ermöglichen. Es können dabei Einschneckenextruder oder Zweischneckenextruder bevorzugt eingesetzt werden. Geeignete Extruder sind im eingangs genannten Stand der Technik näher erläutert.

Dabei wird das Umsetzungsgemisch aus Stufe 2) direkt in den Entgasungsextruder in Stufe 5) geführt.

Bevorzugt wird in den Rührkesselreaktor kein zusätzliches Wasser dosiert, und vor der Umsetzung im Rührkesselreaktor wird keine separate Stufe zur Bildung von Monomersalzen durchlaufen.

Im Entgasungsextruder können neben Wasserdampf auch nicht umgesetzte Monomere, z. B. Diamine ausgetragen werden, die ins Verfahren zurückgeführt werden können. Dabei kann eine Destillationsstufe zwischengeschaltet werden.

Es werden zwei oder mehr parallel geschaltete Rührkesselreaktoren abwechselnd betrieben (im Swing-Modus), deren Umsetzungsprodukte abwechselnd dem Entgasungsextruder zugeführt werden. Hierdurch kann der Entgasungsextruder (abgesehen von Umschaltzeiten) nahezu kontinuierlich mit Polyamid-Präpolymeren versorgt werden. Während aus einem Rührkesselreaktor in den Extruder ausgetragen wird, kann der andere Rührkesselreaktor mit neuen Monomeren beaufschlagt und zur Umsetzung aufgeheizt werden. Je nach Kapazität und Verweilzeit können Dimensionierung und Anzahl der Rührkesselreaktoren angepasst werden.

An den Entgasungsextruder können sich weitere bekannte Aufarbeitungsschritte anschließen. Beispielsweise kann das aus dem Extruder ausgetragene Polyamid als Strang gezogen, in einem Wasserbad gekühlt und zu zylinderförmigen Pellets granuliert werden. Daher können sich eine Strangziehung, Kühlung und Granulierung an den Extruder anschließen.

Das erfindungsgemäße Verfahren erlaubt insbesondere die Herstellung von amorphen und semikristallinen Polyamiden und Copolyamiden, ohne Bildung von Ablagerungen an den Wänden des Rührkesselreaktors, wobei zudem nur sehr geringe Mengen an Nebenprodukten gebildet werden. Die Endprodukte können eine sehr hohe Schmelzeviskosität aufweisen. Es ist die Herstellung unterschiedlichster Polyamide möglich, beispielsweise von PA 6l, basierend auf Hexamethylendiamin und Isophthalsäure, PA 66, basierend auf Hexamethylendiamin und Adipinsäure oder PA 610, basierend auf Hexamethylendiamin und Sebacinsäure.

Die Erfindung wird durch die nachfolgenden Beispiele näher erläutert.

### Beispiele

### Beispiel 1: Herstellung eines Copolyamids, bestehend aus der folgenden Zusammensetzung:

| Komponente | Gewicht |
|---|---|
| Hexamethylendiamin (HMD) | 7,75 kg |
| Dicyclohexylmethyldiamin (Dicycan) | 10,54 kg |
| Adipinsäure | 17,22 kg |
| Caprolactam | 15,15 kg |

### Polykondensation:

HMD und Dicycan wurden in den Speisebehälter eingewogen und mit Stickstoffspülung inert gemacht. Die Temperatur wurde auf 75° unter Rühren angehoben, um diese Komponenten zu schmelzen. Adipinsäure und Caprolactam wurden direkt in den Tankreaktor eingewogen und inert gemacht, bevor die Diaminkomponenten diesen hinzugefügt wurden. Danach wurde die Temperatur des Tankreaktors auf 220°C angehoben. In dem Reaktor reagierten diese Komponenten zusammen unter Abscheidung von Wasser als Kondensatnebenprodukt. Der Reaktionsdruck nahm mit der Zeit zu und erreichte 16 bar nach 2 h. Da der Druck konstant war, wurde die Reaktionsmischung für weitere zwei Stunden bei der gleichen Temperatur erwärmt, bevor mit dem Abführen mittels eines ZDSK-30-Doppelschneckenextruders mit einer Einspeisrate zwischen 1 und 3 kg/h begonnen wurde.

Das aus der Extruderdüse kommende Produkt wurde als ein Strang gezogen, in einem Wasserbad gekühlt und zu zylinderförmigen Pellets granuliert. Die Viskosität der Produkte wurde durch Lösungsviskosimetrie analysiert und der Wert wurde als Viskositätszahl ausgewiesen. Die Polyamidproben wurden in 96 ± 0,1 % Schwefelsäure gelöst, um eine 0,5-gew.-%ige Polymerlösung zuzubereiten. Die Durchlaufzeit des Lösungsmittels und der Polymerlösung wurden bei 25 ± 0,05°C Wasserbadtemperatur in einem Ubbelohde-Viskosimeter ermittelt.

### Resultate:

| Probennummer | Einspeisrate in den Extruder | Viskositätszahl |
|---|---|---|
| 1 | 1 kg/h | 77 ml/g |
| 2 | 1,5 kg/h | 66 ml/g |
| 3 | 2 kg/h | 62 ml/g |
| 4 | 3 kg/h | 51 ml/g |

Das Beispiel 1, welches Hexamethylendiamin/Dicycan/-Adipinsäure/Caprolactam in einem Gewichtsverhältnis von 1 / 1,36 / 2,22 / 1,95 enthält, wurde mit einem unterschiedlichen Monomerverhältnis reproduziert:
Beispiel 1a: 1 / 1,36 / 2,22 / 1
Beispiel 1b: 2 / 1,36 / 4,44 / 1,95

Die Resultate waren wie folgt:

| Probennummer | Einspeisrate in den Extruder | Viskositätszahl |
|---|---|---|
| 1a : 1 | 1 kg/h | 62 ml/g |
| 1a : 2 | 1,5 kg/h | 55 ml/g |
| 1a : 3 | 2 kg/h | 51 ml/g |
| 1a : 4 | 3 kg/h | 47 ml/g |
| 1b : 1 | 1 kg/h | 82 ml/g |
| 1b : 2 | 1,5 kg/h | 73 ml/g |
| 1b : 3 | 2 kg/h | 68 ml/g |
| 1b : 4 | 3 kg/h | 56 ml/g |

### Beispiel 2: Herstellung eines Copolyamids, bestehend aus der folgenden Zusammensetzung:

| Komponente | Gewicht |
|---|---|
| Hexamethylendiamin (HMD) | 7,75 kg |
| Dicyclohexylmethyldiamin (Dicycan) | 10,54 kg |
| Adipinsäure | 17,22 kg |
| Caprolactam | 15,15 kg |

### Polykondensation:

HMD und Dicycan wurden in den Speisebehälter eingewogen und mit Stickstoffspülung inert gemacht. Die Temperatur wurde auf 75° unter Rühren angehoben, um diese Komponenten zu schmelzen. Adipinsäure und Caprolactam wurden direkt in den Tankreaktor eingewogen und inert gemacht, bevor die Diaminkomponenten diesen hinzugefügt wurden. Danach wurde die Temperatur des Tankreaktors auf 220°C angehoben. In dem Reaktor reagierten diese Komponenten zusammen unter Abscheidung von Wasser als Kondensatnebenprodukt. Der Reaktionsdruck nahm mit der Zeit zu und erreichte 16 bar nach 2 h. Danach wurde das Reaktionsgemisch bei 280 °C Außentemperatur auf einen Druck von 18 bar aufgeheizt. Indem der Druck konstant war, wurde die Reaktionsmischung für weitere zwei Stunden bei der gleichen Außentemperatur erwärmt, bevor es auf 1 bar entspannt wurde. Das Reaktionsgemisch wurde für eine Stunde bei gleicher Außentemperatur und 1 bar weiter aufgeheizt.

Am Ende wurde das resultierende Präpolymer mittels eines ZDSK-30-Doppelschneckenextruders mit einer Einspeisrate zwischen 10 und 30 kg/h ausgefahren.

Das aus der Extruderdüse kommende Produkt wurde als ein Strang gezogen, in einem Wasserbad gekühlt und zu zylinderförmigen Pellets granuliert. Die Viskosität der Produkte wurde durch Lösungsviskosimetrie analysiert und der Wert wurde als Viskositätszahl ausgewiesen. Die Polyamidproben wurden in 96 ± 0,1 % Schwefelsäure gelöst, um eine 0,5-gew.-%ige Polymerlösung zuzubereiten. Die Durchlaufzeit des Lösungsmittels und der Polymerlösung wurden bei 25 ± 0,05°C Wasserbadtemperatur in einem Ubbelohde-Viskosimeter ermittelt.

### Resultate:

| Probennummer | Einspeisrate in den Extruder | Viskositätszahl |
|---|---|---|
| 1 | 10 kg/h | 134 ml/g |
| 2 | 20 kg/h | 123 ml/g |
| 3 | 30 kg/h | 108 ml/g |

### Beispiel 3: Herstellung eines Copolyamids, bestehend aus der folgenden Zusammensetzung:

| Komponente | Gewicht |
|---|---|
| Hexamethylendiamin (HMD) | 7,75 kg |
| Dicyclohexylmethyldiamin (Dicycan) | 10,54 kg |
| Adipinsäure | 17,22 kg |
| Caprolactam | 15,15 kg |

### Polykondensation:

HMD, Dicycan, Adipinsäure und Caprolactam wurden 20 Gew.-% Wasser bei 95 °C gelöst. Nach Einstellung der Stöchiometrie wurde der Tankreaktor mit einer Außentemperatur von 280°C aufgeheizt bis zum Erreichen von 18 bar Gesamtdruck. Nachdem der Druck konstant war, wurde die Reaktionsmischung für weitere zwei Stunden bei der gleichen Außentemperatur erwärmt, bevor auf 1 bar entspannt wurde. Das Reaktionsgemisch wurde für eine Stunde bei gleicher Außentemperatur und 1 bar weiter aufgeheizt.

Am Ende wurde das resultierende Präpolymer mittels eines ZDSK-30-Doppelschneckenextruders mit einer Einspeisrate von 25 kg/h ausgefahren.

Das aus der Extruderdüse kommende Produkt wurde als ein Strang gezogen, in einem Wasserbad gekühlt und zu zylinderförmigen Pellets granuliert. Die Viskosität der Produkte wurde durch Lösungsviskosimetrie analysiert und der Wert wurde als Viskositätszahl ausgewiesen. Die Polyamidproben wurden in 96 ± 0,1 % Schwefelsäure gelöst, um eine 0,5-gew.-%ige Polymerlösung zuzubereiten. Die Durchlaufzeit des Lösungsmittels und der Polymerlösung wurden bei 25 ± 0,05°C Wasserbadtemperatur in einem Ubbelohde-Viskosimeter ermittelt.

### Resultate:

| Probennummer | Einspeisrate in den Extruder | Viskositätszahl |
|---|---|---|
| 1 | 25 kg/h | 124 ml/g |

### Beispiel 4: Herstellung von Polyamid aus der folgenden Zusammensetzung:

| Komponente | Gewicht |
|---|---|
| HMD | 36,378 kg |
| Sebacinsäure | 63,315 kg |

### Polykondensation:

HMD wurde in den Speisebehälter eingewogen und mit Stickstoffspülung inert gemacht. Die Temperatur wurde unter Rühren auf 75°C angehoben, um dieses zu schmelzen. Sebacinsäure wurde direkt in den Tankreaktor eingewogen und mit Stickstoff inert gemacht, bevor das HMD dem Reaktor zugegeben wurde. Danach wurde die Temperatur des Tankreaktors auf 220°C angehoben. Das Diamin und die Disäure reagierten zusammen unter Abscheidung von Wasser als Kondensatnebenprodukt. Der Reaktionsdruck nahm mit der Zeit zu und erreichte 17,5 bar nach 2,5 h. Nachdem der Druck konstant war, wurde die Reaktionsmischung für weitere zwei Stunden bei der gleichen Temperatur erwärmt, bevor mit dem Abführen mittels eines ZDSK-30-Doppelschneckenextruders mit einer Einspeisrate zwischen 1 und 3 kg/h begonnen wurde.

Das aus der Extruderdüse kommende Produkt wurde als ein Strang gezogen, in einem Wasserbad gekühlt und zu zylinderförmigen Pellets granuliert. Die Viskosität der Produkte wurde durch Lösungsviskosimetrie, wie weiter oben beschrieben, analysiert.

### Ergebnisse:

| Probe | Einspeisrate in den Extruder | Viskositätszahl |
|---|---|---|
| 1 | 2,2 kg/h | 71 ml/g |

### Beispiel 5: Polyamid auf Basis von Caprolactam, Hexamethylendiamin, Adipinsäure und Dicycan.

In diesem Verfahren wurden die Monomere in Wasser bei 90 °C gelöst. Wasser wurde in einen gerührten Tank gegeben, der als Zuführungstank für den nachfolgenden gerührten Tankreaktor diente. Danach wurden die flüssigen Monomere (Hexamethylendiamin und Dicycan) zugegeben, gefolgt von der Zugabe der festen Monomere. Nach Aufheizen auf 90 °C und Mischen wurde eine wässrige Lösung der Monomeren erhalten mit der nachfolgenden Zusammensetzung:

| **Komponente** | **Gewicht** |
|---|---|
| Wasser | 20 kg |
| Caprolactam | 24,2 kg |
| Adipinsäure | 11,8 kg |
| Dicycan | 17 kg |
| AH-Salz | 26,7 kg |

Nach Homogenisierung der Monomere wurde eine Probe entnommen, um eine pH-Bestimmung durchzuführen. Es folgte eine Korrektur des pH-Werts durch Zugabe geringer Mengen des fehlenden Monomers. Nach der pH-Messung und Korrektur wurde die Monomerlösung in einen 150 l fassenden gerührten Tankreaktor überführt. Der Reaktor wurde mit einer Manteltemperatur von 280 °C erhitzt auf einen internen Druck von 18 bar/abs. Der Druck wurde durch ein Druckregulierungsventil konstant gehalten, bis das meiste Wasser aus dem Reaktor entfernt war. Der Druck wurde sodann langsam abgelassen auf Normaldruck innerhalb von 60 Minuten. Wenn der Normaldruck erreicht war, wurde der Reaktor mit einem Stickstoffstrom von 300 l/h für 30 Minuten gespült. Anschließend wurde der Reaktor geschlossen und für weitere 30 Minuten gerührt. Danach wurden 16 bar/abs Stickstoff auf den Reaktor gepresst, um das Produkt aus dem Reaktor auszutragen.

Das im gerührten Tankreaktor hergestellte Prepolymer wurde durch einen corotierenden Entlüftungs-Doppelschrauben-Extruder ausgetragen. Die Austragsrate wurde durch eine Pumpe gesteuert, die direkt oberhalb des Extruders befindlich war. Das Prepolymer wurde im Extruder postkondensiert, bis zum Erreichen des gewünschten Molekulargewichts unter Entgasung des Reaktionswassers. Die Temperatur im Extruder betrug 220 °C und die Rotationszahl betrug 200 Umdrehungen pro Minute. Die Austragsrate betrug 25 kg/h.

Die Polymerstränge, die aus dem Extruder kamen, wurden in einem Wasserbad abgekühlt und granuliert.

Die folgenden Eigenschaften wurden erhalten:

| | |
|---|---|
| Viskositätszahl: | 125 ml/g |
| Carboxylendgruppen: | 64 mmol/kg |
| Aminoendgruppen: | 65 mmol/kg. |

### Beispiel 6: Herstellung von Polyamid 6, 10

In diesem Verfahren wurden die Monomere in Wasser bei 90 °C gelöst. Wasser wurde in einen gerührten Tank gegeben, der als Zuführtank für den nachfolgenden gerührten Tankreaktor diente. Danach wurde Hexamethylendiamin zugegeben, gefolgt von der Zugabe von Sebacinsäure. Nach Vermischen des Gemisches und Aufheizen auf 90 °C wurde eine wässrige Lösung des Monomersalzes der nachfolgenden Zusammensetzung erhalten:

| **Komponente** | **Menge** |
|---|---|
| Wasser | 35 kg |
| Hexamethylendiamin | 42,1 kg |
| Sebacinsäure | 23,8 kg |

Nach Homogenisierung der Monomere wurde eine Probe entnommen, um eine pH-Wertbestimmung durchzuführen. Eine pH-Korrektur erfolgte durch Zugabe geringer Mengen des fehlenden Monomers.

Nach der pH-Messung und Korrektur wurde die Monomerlösung in einen 150 l fassenden gerührten Tankreaktor gegeben.

Der Reaktor wurde auf eine Manteltemperatur von 290 °C erhitzt, um einen inneren Druck von 18 bar/abs. zu erreichen. Der Druck wurde durch ein Druckregulierungsventil konstant gehalten, bis das meiste Wasser aus dem Reaktor entfernt war. Der Druck wurde sodann langsam abgelassen auf Normaldruck innerhalb von 80 Minuten. Sobald der Normaldruck erreicht wurde, wurde der Reaktor geschlossen und mit 16 bar/abs. Stickstoff beaufschlagt und für weitere 60 Minuten gerührt.

Danach wurde das erhaltene Prepolymer aus dem gerührten Tankreaktor direkt in einen gleichlaufenden Entgasungs-Doppelschrauben-Extruder geführt. Die Austragsrate wurde durch eine Pumpe gesteuert, die direkt oberhalb des Extruders angeordnet war. Das Prepolymer wurde im Extruder nachkondensiert bis zu einem gewünschten Molekulargewicht unter Entgasung des Reaktionswassers. Die Temperatur im Extruder betrug 230 °C und die Rotationszahl betrug 180 Umdrehungen pro Minute. Die Austragsrate betrug 20 kg/h. Die Polymerstränge aus dem Extruder wurden in einem Wasserbad gekühlt und granuliert.

Die folgenden Eigenschaften wurden erhalten:

| | |
|---|---|
| Viskositätszahl: | 147 ml/g |
| Carboxylendgruppen: | 66 mmol/kg |
| Aminoendgruppen: | 53 mmol/kg |

### Beispiel 7: Herstellung von Polyamid 6,10

Die Monomeraufbereitung erfolgte wie in Beispiel 6 beschrieben, mit der dortigen Zusammensetzung. Die weitere Herstellung folgt dem Verfahren gemäß Beispiel 6, jedoch wurde der Druck im gerührten Tankreaktor innerhalb von 80 Minuten auf 3 bar/abs. vermindert. Danach wurde der Reaktor geschlossen und mit 17 bar/abs. Stickstoff beaufschlagt und für weitere 60 Minuten gerührt.

Im nachfolgenden Extruder betrug die Umdrehungszahl 240 Umdrehungen pro Minute mit einer Austragsrate von 32 kg/h.

Das erhaltene Polyamid wies die folgenden Eigenschaften auf:

| | |
|---|---|
| Viskositätszahl: | 112 ml/g |
| Carboxylendgruppen: | 85 mmol/kg |
| Aminoendgruppen: | 70 mmol/kg |

### Beispiel 8: Herstellung von Polyamid 6,10

Die Herstellung der Ausgangsmonomere erfolgte wie in Beispiel 6 beschrieben. Auch die weitere Herstellung erfolgte wie in Beispiel 6 beschrieben, wobei jedoch im gerührten Tankreaktor der Druck langsam innerhalb von 80 Minuten auf 1,3 bar/abs. vermindert wurde. Danach wurde der Reaktor geschlossen und mit 17 bar/abs. Stickstoff beaufschlagt und für weitere 60 Minuten gerührt. Im nachfolgenden Extruder betrug die Rotationszahl 240 Umdrehungen pro Minute bei einer Austragsrate von 30 kg/h.

Das erhaltene Polyamid wies die folgenden Eigenschaften auf:

| | |
|---|---|
| Viskositätszahl: | 129 ml/g |
| Carboxylendgruppen: | 70 mmol/kg |
| Aminoendgruppen: | 54 mmol/kg. |

### Beispiel 9: Herstellung von Polyamid 6,10

Die Monomerzubereitung und Herstellung erfolgten wie in Beispiel 6 beschrieben. Der Druck wurde wie in Beispiel 6 beschrieben innerhalb von 80 Minuten auf Normaldruck vermindert. Nachdem Normaldruck erreicht wurde, wurde der Reaktor mit einem Stickstoffstrom von 300 l/h für 15 Minuten gespült. Danach wurde der Reaktor geschlossen und mit 17 bar/abs. Stickstoff beaufschlagt, um das Produkt aus dem Reaktor zu entfernen. Die weitere Herstellung erfolgte wie in Beispiel 6 beschrieben, wobei die Austragsrate aus dem Extruder 14 kg/h betrug.

Das erhaltene Polyamid wies die folgenden Eigenschaften auf:

| | |
|---|---|
| Viskositätszahl: | 171 ml/g |
| Carboxylendgruppen | 54 mmol/kg |
| Aminoendgruppen: | 42 mmol/kg. |

### Beispiel 10: Herstellung von Polyamid 6,6

In diesem Verfahren wurden 85 kg AH-Salz und 15 kg Wasser in einen 150 l fassenden gerührten Tankreaktor gegeben. Anschließend wurde der Reaktor auf eine Manteltemperatur von 300 °C aufgeheizt, um einen inneren Druck von 15,5 bar/abs. zu erhalten. Der Druck wurde über ein Druckregulierungsventil konstant gehalten, bis der größte Teil des Wassers aus dem Reaktor entfernt war. Sodann wurde der Druck langsam auf Normaldruck innerhalb von einer Stunde vermindert. Sobald Normaldruck erreicht war, wurde der Reaktor mit einem Stickstoffstrom von 300 l/h für 15 Minuten gespült. Anschließend wurde der Reaktor geschlossen und mit 16 bar/abs. Stickstoff beaufschlagt, um das Produkt aus dem Reaktor auszutragen.

Die Umsetzung im Extruder erfolgte wie in Beispiel 6 betrieben, wobei die Temperatur 270 °C betrug, die Umdrehungszahl 240 Umdrehungen pro Minute und die Austragsrate 30 kg/h.

Das erhaltene Polyamid wies die folgenden Eigenschaften auf:

| | |
|---|---|
| Viskositätszahl: | 157 ml/g |
| Carboxylendgruppen: | 46 mmol/kg |
| Aminoendgruppen: | 72 mmol/kg. |

### Beispiel 11: Polyamid auf der Basis von Hexamethylendiamin, Terephthalsäure, Isophthalsäure und meta-Xylylendiamin

In diesem Verfahren wurden die Monomere in Wasser bei 95 °C gelöst. Wasser wurde in einen gerührten Tank gegeben, der als Zuführtank für den nachfolgenden gerührten Tankreaktor diente. Danach wurden die flüssigen Monomere (Hexamethylendiamin und meta-Xylylendiamin), gefolgt von den Säuremonomeren, zugegeben. Nach Aufheizen auf 95 °C und Vermischen wurde eine wässrige Lösung der Monomeren erhalten mit der nachfolgenden Zusammensetzung:

| **Komponente** | **Menge** |
|---|---|
| Wasser | 66 kg |
| Isophthalsäure | 11,12 kg |
| Terephthalsäure | 20,54 kg |
| Hexamethylendiamin | 21,11 kg |
| meta-Xylylendiamin | 1,21 kg |

Die weitere Herstellung folgte wie in Beispiel 6 beschrieben. Der Reaktor wurde auf eine Manteltemperatur von 280 °C erhitzt, um einen internen Druck von 25 bar/abs. zu erreichen. Der Druck wurde über ein Druckregulierungsventil konstant gehalten, bis der größte Teil des Wassers aus dem Reaktor entfernt war. Das erhaltene Prepolymer wurde sodann aus dem gerührten Tankreaktor in den gleichlaufenden Entgasungs-Doppelschrauben-Extruder geführt. Die Austragsrate wurde durch ein Austragsventil direkt oberhalb des Extruders geregelt. Dieses Ventil wurde auf eine Temperatur von 340 °C aufgeheizt. Das Prepolymer wurde im Extruder auf das gewünschte Molekulargewicht unter Entgasung von Wasser nachkondensiert. Die Temperatur im Extruder betrug 320 °C und die Rotationszahl betrug 160 Umdrehungen pro Minute. Die Austragsrate betrug 30 kg/h.

Die aus dem Extruder ausgetragenen Stränge wurden in einem Wasserbad gekühlt und granuliert. Die folgenden Eigenschaften wurden erhalten:
Viskositätszahl von 113 ml/g bei einem Durchsatz von 5 kg/h, 91 ml/g bei 10 kg/h, 78 ml/g bei 15 kg/h, 65 ml/g bei 20 kg/h, 55 ml/g bei 30 kg/h.

## Patentansprüche

1. Batch-Verfahren zur Herstellung von Polyamiden auf Basis von Dicarbonsäuren und Diaminen durch
1) Dosieren der gesamten Monomermenge aus linearen endständigen, aliphatischen C₄-C₂₀-Dicarbonsäuren, linearen aliphatischen, endständigen C₄-C₂₀-Diaminen und gegebenenfalls Lactamen in der gewünschten Stöchiometrie in einem geschlossenen Rührkesselreaktor,
2) Erwärmen des Monomerengemisches im gerührten Rührkesselreaktor unter Einstellung eines bestimmten Drucks auf eine gewünschte Umsetzungstemperatur zur Herstellung eines Präpolymeren, wobei die Umsetzung in Stufe 2) bei einer Temperatur im Bereich von 70 bis 350°C und einem Maximaldruck im Bereich von 3 bis 100 bar erfolgt und die Umsetzung im Rührkesselreaktor nach einem Umsatz im Bereich von 50 bis 97 %, bezogen auf die Amino- und Carboxylgruppen, beendet wird, wobei die Viskositätszahl des Präpolymeren im Bereich von 3 bis 200 ml/g liegt, bestimmt durch Lösungsviskosimetrie, wobei die Polyamidproben in 96 ± 0,1 % Schwefelsäure gelöst wurden, um eine 0,5-gew.-%ige Polymerlösung zuzubereiten und wobei die Durchlaufzeit des Lösungsmittels und der Polymerlösung bei 25 ± 0,05°C Wasserbadtemperatur in einem Ubbelohde-Viskosimeter ermittelt wurden,
5) Umsetzung des Umsetzungsgemisches aus Stufe 2), in der Schmelze in einem Entgasungsextruder zum weiteren Aufbau des Molekulargewichts unter Austrag von Wasserdampf und ohne Zusatz von zusätzlichen polyamidbildenden Monomeren oder Polyamiden, bei einer Temperatur im Bereich von 120 bis 370 °C und einem Druck im Bereich von 0,01 bis 20 bar, wobei das Umsetzungsgemisch aus Stufe 2) direkt in den Entgasungsextruder in Stufe 5) geführt wird
und zwei oder mehr parallel geschaltete Rührkesselreaktoren abwechselnd betrieben werden, deren Umsetzungsprodukte abwechselnd dem Entgasungsextruder zugeführt werden.

2. Verfahren nach Anspruch 1, **dadurch gekennzeichnet, dass** in den Rührkesselreaktor kein zusätzliches Wasser dosiert wird.

3. Verfahren nach einem der Ansprüche 1 oder 2, **dadurch gekennzeichnet, dass** vor der Umsetzung im Rührkesselreaktor keine separate Stufe zur Bildung von Monomersalzen durchlaufen wird.

4. Verfahren nach einem der Ansprüche 1 bis 3, **dadurch gekennzeichnet, dass** im Entgasungsextruder neben Wasserdampf nicht umgesetzte Monomere ausgetragen werden, die ins Verfahren zurückgeführt werden.

5. Verfahren nach einem der Ansprüche 1 bis 4, **dadurch gekennzeichnet, dass** der Schmelzpunkt der erhaltenen Polyamide oder Copolyamide 110 bis 350°C beträgt.

## Claims

1. A batch process for the production of polyamides, based on dicarboxylic acids and on diamines, by
1) feeding the entire amount of monomer composed of linear terminal aliphatic C₄-C₂₀ dicarboxylic acids, of linear terminal aliphatic C₄-C₂₀ diamines, and, if appropriate, of lactams, in the desired stoichiometry, in a closed stirred-tank reactor,
2) heating the monomer mixture in the stirred-tank reactor, with stirring, and with setting of a certain pressure, to a desired reaction temperature for the production of a prepolymer, where the reaction in stage 2) is carried out at a temperature in the range from 70 to 350°C and at a maximum pressure in the range from 3 to 100 bar and the reaction in the stirred-tank reactor is terminated once the conversion reached is in the range from 50 to 97%, based on the amino groups and carboxy groups, where the intrinsic viscosity of the prepolymer is in the range from 3 to 200 ml/g, determined by solution viscometry, where the polyamide specimens were dissolved in 96 ± 0.1% sulfuric acid in order to prepare a 0.5% strength by weight polymer solution and where the flow time of the solvent and of the polymer solution were determined at 25 ± 0.05°C water bath temperature in an Ubbelohde viscometer,
5) reacting the reaction mixture from stage 2) in the melt in a vented extruder for further increase of the molecular weight, with discharge of water vapor, and without use of additional polyamide-forming monomers or of polyamides, at a temperature in the range from 120 to 370°C and a pressure in the range from 0.01 to 20 bar, where the reaction mixture from stage 2) is passed directly into the vented extruder in stage 5) .

2. The process according to claim 1, wherein no additional water is fed into the stirred-tank reactor.

3. The process according to either of claims 1 and 2, wherein, prior to the reaction in the stirred-tank reactor, no separate stage is undergone for the formation of monomer salts.

4. The process according to any of claims 1 to 3, wherein, in the vented extruder, not only water vapor but also unconverted monomers are discharged, these being returned to the process.

5. The process according to any of claims 1 to 4, wherein the melting point of the resultant polyamides or copolyamides is from 110 to 350°C.

## Revendications

1. Procédé discontinu pour la fabrication de polyamides à base d'acides dicarboxyliques et de diamines, par :
1) introduction de la quantité de monomères totale constituée par des acides dicarboxyliques en C₄-C₂₀ aliphatiques linéaires terminaux, des diamines en C₄-C₂₀ linéaires aliphatiques terminales et éventuellement des lactames en la stoechiométrie souhaitée dans un réacteur à cuve agitée fermé,
2) chauffage du mélange de monomères dans le réacteur à cuve agitée agité pour ajuster une pression déterminée à une température de réaction souhaitée pour la fabrication d'un prépolymère, la réaction à l'étape 2) ayant lieu à une température dans la plage allant de 70 à 350 °C et à une pression maximale dans la plage allant de 3 à 100 bar, et la réaction dans le réacteur à cuve agitée étant terminée après une conversion dans la plage allant de 50 à 97 %, par rapport aux groupes amino et carboxyle, l'indice de viscosité du prépolymère se situant dans la plage allant de 3 à 200 ml/g, déterminé par viscosimétrie en solution, les échantillons de polyamide ayant été dissous dans de l'acide sulfurique à 96 ± 0,1 % afin de préparer une solution de polymère à 0,5 % en poids, et le temps de passage du solvant et de la solution de polymère ayant été déterminé à une température du bain d'eau de 25 ± 0,05 °C dans un viscosimètre Ubbelohde,
5) mise en réaction du mélange réactionnel de l'étape 2) à l'état fondu dans une extrudeuse à dégazage pour l'augmentation supplémentaire du poids moléculaire avec déchargement de vapeur d'eau et sans ajout de monomères formant des polyamides supplémentaires ou de polyamides, à une température dans la plage allant de 120 à 370 °C et à une pression dans la plage allant de 0,01 à 20 bar, le mélange réactionnel de l'étape 2) étant introduit directement dans l'extrudeuse à dégazage de l'étape 5), et deux réacteurs à cuve agitée raccordés en parallèle ou davantage étant exploités en alternance, dont les produits de réaction sont introduits en alternance dans l'extrudeuse à dégazage.

2. Procédé selon la revendication 1, **caractérisé en ce qu'**aucune eau supplémentaire n'est introduite dans le réacteur à cuve agitée.

3. Procédé selon l'une quelconque des revendications 1 ou 2, **caractérisé en ce qu'**aucune étape séparée pour la formation de sels de monomères n'est réalisée avant la réaction dans le réacteur à cuve agitée.

4. Procédé selon l'une quelconque des revendications 1 à 3, **caractérisé en ce qu'**en plus de la vapeur d'eau, des monomères non réagis sont déchargés de l'extrudeuse à dégazage, qui sont recyclés dans le procédé.

5. Procédé selon l'une quelconque des revendications 1 à 4, **caractérisé en ce que** le point de fusion des polyamides ou copolyamides obtenus est de 110 à 350 °C.
